Europäisches Patentamt

European Patent Office

Office européen des brevets

(19)

(11) Veröffentlichungsnummer: **0 139 150 B1**

(12) # EUROPÄISCHE PATENTSCHRIFT

(45) Veröffentlichungstag der Patentschrift:
19.11.87

(51) Int. Cl.⁴: **F 16 K 11/07**

(21) Anmeldenummer: **84109853.6**

(22) Anmeldetag: **18.08.84**

(54) Schieberventil.

(30) Priorität: **08.09.83 DE 3332363**

(43) Veröffentlichungstag der Anmeldung:
**02.05.85 Patentblatt 85/18**

(45) Bekanntmachung des Hinweises auf die Patenterteilung:
**19.11.87 Patentblatt 87/47**

(84) Benannte Vertragsstaaten:
**AT BE CH DE FR GB IT LI NL SE**

(56) Entgegenhaltungen:
**DE - A - 2 013 689**
**US - A - 3 635 249**

(73) Patentinhaber: **DEERE & COMPANY, 1 John Deere Road, Moline Illinois 61265 (US)**

(72) Erfinder: **Becker, Manfred Adolf, Dipl.-Ing., Hanns-Fay-Strasse 3, D-6710 Frankenthal (DE)**
Erfinder: **Ortlepp, Hilmar Siegfried, Dipl.-Ing., Danziger Baumgang 28, D-6800 Mannheim 31 (DE)**

(74) Vertreter: **Feldmann, Bernhard et al, DEERE & COMPANY European Office, Patent Department Steubenstrasse 36-42 Postfach 503, D-6800 Mannheim 1 (DE)**

## Beschreibung

Die Erfindung betrifft ein Schieberventil mit einem Gehäuse, das mindestens einen ersten und einen zweiten Anschluss aufweist, mit einem Schieber, der gegenüber dem Gehäuse in mindestens eine eine Verbindung oder eine Sperre zwischen beiden Anschlüssen bildende Stellung bringbar ist, mit mindestens einem Dichtungselement, das den Schieber konzentrisch umgibt, und mit einem Ringspalt zwischen dem Schieber und dem Gehäuse zwischen den Anschlüssen.

Bei einem bekannten Schieberventil (DE-A-2 013 689) sind in die Mantelfläche eines in einem Gehäuse angeordneten Schiebers Nuten eingedreht, die in sich axial unverschiebliche, radial dehnbare Dichtungselemente in der Art von Blähkörperdichtungen aufnehmen. Der Schieber ist mit einer zentralen Längsbohrung versehen, von der aus sich Radialbohrungen zu dem Boden der Nuten erstrecken und der über eine weitere Radialbohrung von einer Pumpe gelieferte Druckflüssigkeit zugeführt wird. Das Gehäuse ist mit mehreren Anschlüssen versehen, die untereinander mittels des Schiebers verbunden oder gegeneinander abgesperrt werden können, wobei einer der Anschlüsse mit der Pumpe in Verbindung steht. Der Schieber ist so ausgebildet, dass stets Druckflüssigkeit von der Pumpe kommend auf dem Weg durch die weitere Radialbohrung und die Längsbohrung an den Dichtungselementen ansteht und diese gegen die Wandung der den Schieber aufnehmenden Bohrung zu Dichtzwecken presst.

Diesem Schieberventil haftet der Nachteil an, dass sein Schieber aufgrund der an die Wandung der Bohrung angepressten Dichtungselemente insbesondere bei einem hohen Druck in den Nuten nur unter hohem Kraftaufwand axial verschiebbar ist.

Die der Erfindung zugrunde liegende Aufgabe wird darin gesehen, ein Schieberventil mit einem hohen Dichtgrad zu schaffen, dessen Schieber unter geringerem Kraftaufwand verstellbar ist.

Diese Aufgabe ist erfindungsgemäss durch Patentanspruch 1 gelöst worden.

Auf diese Weise bauen die Dichtungselemente während der Bewegung des Schiebers keinen Reibwiderstand auf, sondern erst dann, wenn er eine bestimmte Stellung bereits eingenommen hat. Dadurch, dass die Dichtungselemente radial beweglich sind, kann auch auf zu geringe Fertigungstoleranzen an der Bohrung oder dem Schieber verzichtet werden.

In besonders zuverlässiger Weise und in ihrer Wirkung relativ unabhängig von der Ausgestaltung der Funktion des Schieberventils wird eine hohe Dichtwirkung dadurch erzielt, dass das Dichtungselement flexibel ausgebildet und in der den Zufluss zu dem Verbraucher sperrenden Stellung druckbeaufschlagbar ist. Durch die flexible Ausbildung kann das Dichtungselement auch grössere Freiräume ausfüllen. Die Möglichkeit der Druckbeaufschlagung lässt die Dichtfunktion des Dichtungselements nicht nur von dessen eigener Verformungskraft abhängig werden, sondern sie sorgt dafür, dass es sich bis in die letzten Freiräume, die noch Druckmedium hindurchlassen könnten, drückt und somit eine regelrechte Sperre aufbaut. Je höher der das Dichtungselement beaufschlagende Druck ist, um so höher ist auch die Dichtwirkung. Von aussen einwirkende Kräfte, die sich beispielsweise aus Verspannungen im Aufbau des Schieberventils oder durch aussergewöhnliche Hitzeeinwirkungen ergeben können, beeinflussen die Dichtfunktion nicht, da sich das Dichtungselement den jeweiligen Gegebenheiten anpasst.

Um dem Dichtungselement auch während der Verschiebung des Schiebers einen sicheren Halt in dem Schieberventil zu geben und um eine eindeutige Anpressung des Dichtungselements speziell an der Dichtfläche zu gewährleisten, wird nach einem weiteren Merkmal der Erfindung angeregt, dass das Dichtungselement in eine Ausnehmung eingesetzt ist. Durch das Einsetzen des Dichtungselements in die Ausnehmung, die es grösstenteils umgibt, kann es sich bei Druckbeaufschlagung nur nach der noch offenen Seite, also zu dem Schieber oder dem Gehäuse hin, ausdehnen und dort eine für die Dichtfunktion notwendige Anpressung verursachen. Das Dichtungselement könnte in das Schieberventil als Schlauch eingeklebt oder eingeklemmt sein; eine besonders sichere und dauerhafte Befestigung wird aber auch in einer formschlüssigen Verbindung, wie sie sich durch die Ausnehmung ergibt, gesehen. Diese Befestigung ist besonders dann von grossem Nutzen, wenn das Druckmedium aggressive Bestandteile aufweist, die den Press- oder Klebesitz in seiner Haltekraft negativ beeinflussen könnten. Um zu gewährleisten, dass die Dichtwirkung nur in der vorgenannten Stellung auftritt, und da in dem Schieberventil die Stellungen über den Schieber bestimmt werden, wird weiterhin nach der Erfindung vorgeschlagen, dass die Ausnehmung in dem Schieber vorgesehen ist. Da sich in ein Drehteil wie den Schieber eine Ausnehmung leichter eindrehen lässt als in ein normalerweise unrundes Gehäuse, ergeben sich dadurch auch noch weitere Fertigungskostenersparungen.

Wenn erfindungsgemäss das Dichtungselement den Schieber in der Ausnehmung reifenförmig umgibt und das Dichtungselement im Querschnitt trapezförmig ausgebildet und zum Schieber hin offen ist, kann sich das Dichtungselement bei Druckbeaufschlagung auf die den Schieber aufnehmende Bohrung im Gehäuse zubewegen, wobei die Seitenwände des «Reifens» zusätzlich gegen die seitlichen Begrenzungen der Ausnehmung angepresst werden und somit dafür sorgen, dass für die Abdichtung benötigtes Druckmedium nicht verlorengeht. Durch die Trapezform ergeben sich an den geneigten Seitenwänden des Reifens Schubkräfte, die zusätzlich zu den an der eigentlichen Dichtfläche anstehenden Druckkräften wirken und somit eine hohe Flächenpressung ergeben.

Dadurch, dass die Ausnehmung in dem Schieber ringförmig und im Querschnitt trapezförmig ausgebildet ist, entsteht beim Bewegen des Dichtungselements zu der Bohrung in dem Gehäuse hin an den schrägen Seiten des Trapezes eine zum Schieberinnern hin gerichtete Kraftkomponente, die dafür sorgt, dass das Dichtungselement schnellstmöglich wieder seine nichtdichtende Stellung einnehmen kann, wenn dies gewollt ist.

Ein vorzügliches Merkmal der Erfindung wird darin gesehen, dass das Dichtungselement in der den Zufluss von der Druckquelle zu dem Verbraucher sperrenden Stellung druckbeaufschlagbar und in der den Zufluss zu dem Verbraucher öffnenden Stellung des Schiebers drucklos ist. Über ein derart ausgebildetes und gesteuertes Schieberventil beaufschlagte Verbraucher werden in ihrer Ruhestellung doppelt gegen ein weiteres Bewegen gesichert, da zudem, dass der Schieber den Zufluss ohnehin absperrt, das Dichtungselement eine zusätzliche Sperre bewirkt. Ausserdem trägt das Dichtungselement über seine Anpressung dazu bei, dass der Schieber in seiner den Zufluss zu dem Verbraucher sperrenden Stellung noch festgehalten wird und sich nicht langsam in seine den Zufluss öffnende Stellung verschiebt.

Um bei vorhandenen scharfen Kanten entlang der Gleitfläche des Schiebers in der Bohrung des Gehäuses eventuell mögliche Zerstörungen des Dichtungselements zu verhindern, wird nach einem anderen Merkmal der Erfindung vorgeschlagen, dass die Ausnehmung in Richtung der Dichtkräfte eine grössere Erstreckung aufweist als das Dichtungselement im drucklosen Zustand. Das vollständige Einziehen des Dichtungselements in die Ausnehmung und das schnelle Zurückziehen von der Anlage an der Dichtfläche wird dadurch begünstigt, dass das Dichtungselement endseitig mit Wülsten versehen ist, da diese Wülste aufgrund ihrer Steifheit eine besonders grosse Rückstellkraft ausüben. Die Druckbeaufschlagung des Dichtunngselements erfolgt bei einem Schieberventil, dessen Schieber eine Längsbohrung aufweist, ohne grossen Aufwand dadurch, dass das Dichtungselement mit der Längsbohrung und diese wiederum mit der Druckquelle verbunden ist, wobei das Druckmedium von der Druckquelle für das Schieberventil oder einer separaten Druckquelle, die auch ein anderes Druckmedium, wie Pressluft anstatt Drucköl, fördern kann, erhalten wird.

Bei einem Schieberventil, dessen Gehäuse einen zu einem Vorratsbehälter führenden Anschluss aufweist und dessen Schieber von einer den Abfluss von dem Verbraucher sperrenden in eine diesen öffnende Stellung bringbar ist, wird der Verbraucher auch gegen eine nicht gewollte Bewegung in die andere Richtung geschützt, wenn zwischen dem zu dem Verbraucher führenden Anschluss und dem zu dem Vorratsbehälter führenden Anschluss ein weiteres Dichtungselement vorgesehen ist, das in der den Abfluss von dem Verbraucher sperrenden Stellung druckbeaufschlagbar und in der den Abfluss von diesem öffnenden Stellung drucklos ist. Der Verbraucher steht also in beiden Richtungen auf Block.

Die Druckbeaufschlagung des Dichtungselements kann sowohl manuell wie auch automatisch gesteuert werden, wozu es nach der Erfindung von Vorteil sein kann, wenn in der Verbindung zwischen dem Dichtungselement und der Druckquelle ein in Abhängigkeit von der Stellung des Schiebers betätigbares Dichtventil vorgesehen ist. Dabei braucht die Abhängigkeit aber nicht nur zu der Stellung des Schiebers gegeben zu sein. Es kann auch eine von dem am Verbraucher anstehenden Druck, der Temperatur des Druckmediums, der Art des Verbrauchers, den Einsatzverhältnissen des Verbrauchers oder des Schieberventils, einer gewollten zeitlichen Verzögerung zwischen den Bewegungen des Schiebers und der Verbrauchers oder sonstigen Parametern abhängige Steuerung des Dichtventils und damit der Druckbeaufschlagung des Dichtungselements gewählt werden.

Nach einem weiteren Gedanken der Erfindung kann das Schieberventile auch mit dem Dichtventil eine Baueinheit bilden, was durch die entsprechende Anordung von den Zufluss, den Abfluss und die Druckbeaufschlagung des Dichtungselements steuernden Kanälen praktisch möglich ist. Das Druckmedium für die Dichtungselemente wird in einfacher Weise in die Längsbohrung geleitet, indem in die Längsbohrung eine mit dem Gehäuse des Schieberventils fest verbundene Rohrleitung mündet.

Wenn erfindungsgemäss der Zufluss zu dem Dichtungselement gedrosselt und der Abfluss von dem Dichtungselement ungedrosselt erfolgt, dann löst sich beim Verstellen des Schiebers in eine den Zufluss zu oder den Abfluss von dem Verbraucher gestattende Stellung das Dichtungselement sehr schnell von der Bohrung des Gehäuses und ermöglicht so einen raschen Schieberstellungswechsel.

In der Zeichnung ist ein nachfolgend näher beschriebenes Ausführungsbeispiel eines erfindungsgemäss abgedichteten Schieberventils veranschaulicht. Es zeigt:

Figur 1 einen Hydraulikschaltplan in schematischer Darstellung für eine Hydraulikanlage, in der eine erfindungsgemässe Dichtung Anwendung findet,

Figur 2 ein Schieberventil mit der erfindungsgemässen Dichtung,

Figur 3 eine mögliche Anordnung eines mit der Dichtung verbundenen Ventils.

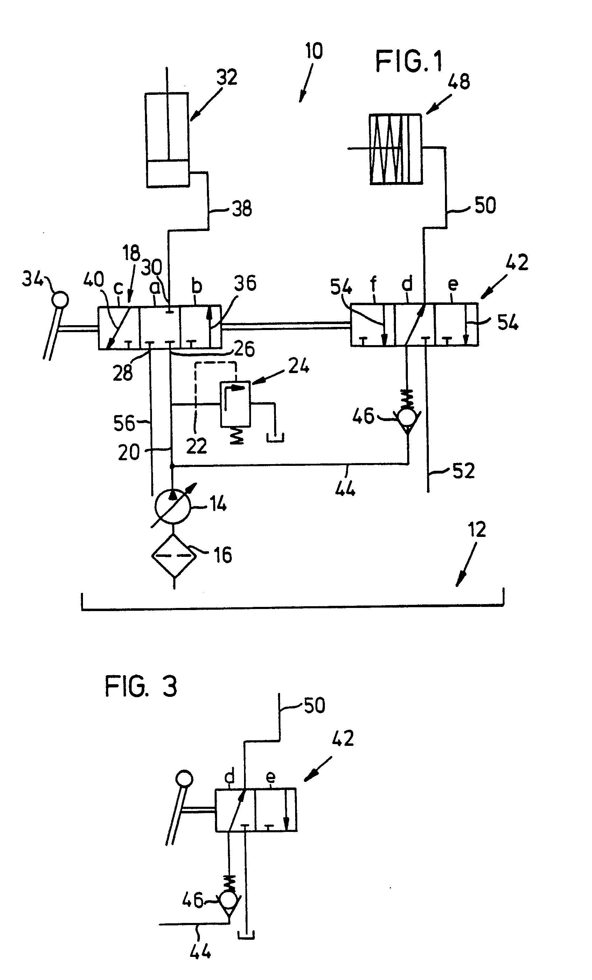

Die in Figur 1 gezeichnete Hydraulikanlage 10 beinhaltet einen Vorratsbehälter 12, aus welchem eine Druckquelle in Form einer Pumpe 14 über einen Filter 16 Flüssigkeit, wie etwa Hydrauliköl, ansaugt und einem Schieberventil, das fortan als Hydraulikventil 18 bezeichnet wird, über eine Leitung 20 zuführt, wobei von dieser eine Überdruckleitung 22 abzweigt, die mit einem Druckbegrenzungsventil 24 in Verbindung steht. Die Pumpe 14 ist in diesem Anwendungsfall als eine Pumpe mit variablem Verdrängungsvolumen ausgebildet, wie sie bei einem geschlossenen Hydrauliksystem Anwendung findet und die bei Erreichen eines vorbestimmten Druckes ihre Förderung einstellt. Beim Vorhandensein eines offenen Hydrauliksystems ist diese Pumpe lediglich gegen eine andere Pumpe mit konstantem Verdrängungsvolumen auszutauschen, wobei das Hydraulikventil 18, wenn es sich in seiner Neutralstellung befindet, eine Möglichkeit bieten muss, dennoch geförderte Druckflüssigkeit dem Vorratsbehälter wieder zuzuführen. Das Hydraulikventil 18 ist im Falle eines geschlossenen Hydrauliksystems als 3/3-Wegeventil ausgeführt, was hierbei bedeutet, dass es drei Stellungen, nämlich eine Neutralstellung a, eine Zuflussstellung b und eine Abflussstellung c einnehmen kann. Es bedeutet ferner, dass in jeder seiner Stellungen a, b und c drei Anschlüsse, diese sind ein Pumpenanschluss 26, ein Vorratsbehälteranschluss 28 und ein Verbraucheranschluss 30, für einen Verbraucher in der Form eines Hydraulikzylinders 32 vorgesehen sind. Das Hydraulikventil 18 ist über einen Bedienungshebel 34 in seine verschiedenen Stellungen a, b, c, bewegbar, was jedoch nicht bedeutet, dass es nicht auch mittels elekrischer oder sonstiger Stellmittel in eine seiner Stellungen gebracht werden könnte. In der Neutralstellung a ist der Pumpenanschluss 26, der Vorratsbehälteranschluss 28 und der Verbraucheranschluss 30 gesperrt, und die Pumpe 14 stellt ihre Förderung ein. Nimmt das Hydraulikventil 18 seine Stellung b ein, dann fördert die Pumpe 14 über einen Durchlass 36 Druckflüssigkeit zu einer Leitung 38, die in den Hydraulikzylinder 32 mündet, wobei der Vorratsbehälteranschluss 28 gesperrt bleibt. Letztlich verbindet in der Stellung c das Hydraulikventil 18 durch einen Durchlass 40 den Vorratsbehälter 12 mit dem Hydraulikzylinder 32. Das hier nur schematisch dargestellte Hydraulikventil 18 entspricht in diesem Falle einem Schieberventil.

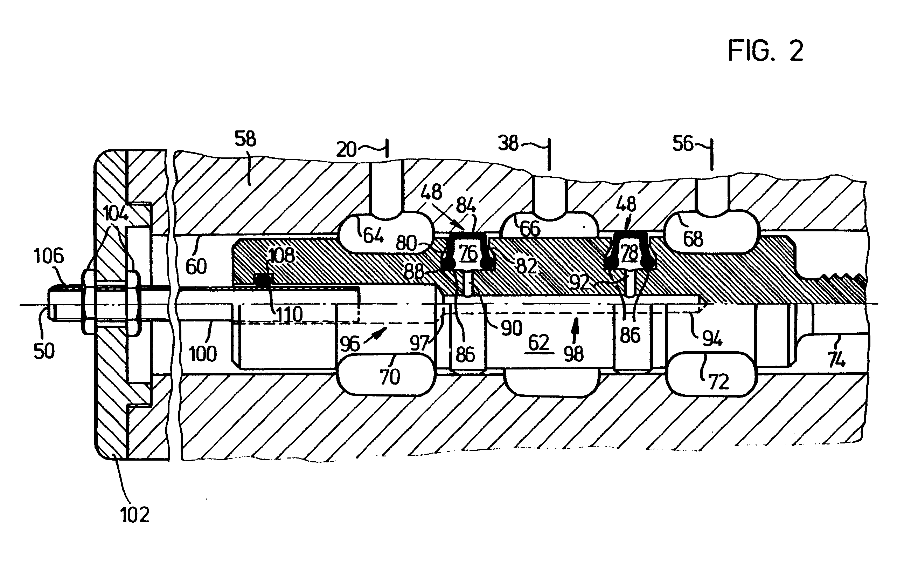

Das Hydraulikventil 18 überträgt seine Verstellbewegung gleichzeitig auch auf ein weiteres Ventil, das die Funktion eines Dichtventils 42 einnimmt. Es erhält über eine Leitung 44, die von der Leitung 20 abzweigt und die ein federbelastetes Rückschlagventil 46 enthält, das in Richtung auf das Dichtventil 42 hin öffnet, Druckflüssigkeit. Es kann, da es als 3/3-Wegenventil ausgebildet ist, ebenfalls drei Stellungen einnehmen, die im folgenden mit d für Durchgangsstellung und e und f für je eine Entlastungsstellung bezeichnet werden. Das Dichtventil 42 und das Hydraulikventil 18 können auch baulich vereinigt sein. Weiterhin ist es möglich, die Verbindung zwischen beiden entfallen zu lassen und das Dichtventil 42 manuell oder in Abhängigkeit von sonstigen Gegebenheiten zu verschieben, woraufhin es lediglich eine Stellung d und entweder Stellung e oder f aufweisen müsste (siehe hierzu Figur 3). Dem Dichtventil 42 ist stromabwärts ein als Dichtbalg 48 bezeichnetes Dichtelement, dessen Ausführung und Anordnung in Verbindung mit Figur 2 noch genau beschrieben wird, nachgeschaltet. Es wird lediglich bereits jetzt dazu ausgeführt, dass der Dichtbalg 48 den Zu- oder Abfluss zu bzw. von dem Hydraulikzylinder 32 unterbinden soll, wobei dem Dichtventil 42 selbst keine Dichtfunktion zukommt. Die Steuerung des Dichtventils 42 erfolgt dabei in Abhängigkeit von der Stellung des Hydraulikventils 18. So könnten an dem Bedienungshebel 34 elektrische Schaltkontaktgeber angreifen, die dessen Stellung über Magnetventile auf das Dichtventil 42 übertragen. Andererseits sind auch mechanische oder hydraulische Verbindungen zwischen dem Dichtventil 42 und dem Hydraulikventil 18 möglich. Der Dichtbalg 48 ist in der schematisch dargestellten Hydraulikanlage 10 der Einfachheit halber als einseitig federbelasteter Verbraucher dargestellt. Das Dichtventil 42 weist somit ausser der Verbindung mit der von der Pumpe 14 kommenden Leitung 44 eine Verbindung mit einer Leitung 50, die zu dem Dichtbalg 48 führt, und eine Verbindung mit einer zu dem Vorratsbehälter 12 führenden Abflussleitung 52 auf. Dabei erfolgt in der Stellung d ein Flüssigkeitsfluss zwischen der Pumpe 14 und dem Dichtbalg 48, während in der Stellung e und der Stellung f der Dichtbalg 48 über einen Kanal 54 mit dem Vorratsbehälter 12 verbunden wird.

Aus dem Vorbeschriebenen ergibt sich folgende Arbeitsweise. Zum Ausfahren des Hydraulikzylinders 32 wird das Hydraulikventil 18 in seine Stellung b geschoben, worauf die Druckflüssigkeit ihren Weg von der Pumpe 14 aus über die Leitung 20, den Durchlass 36 und die Leitung 38 zum Hydraulikzylinder 32 hin nimmt. Mittel- oder unmittelbar mit dem Verschieben des Hydraulikventils 18 wird durch die abhängige Steuerung auch das Dichventil 42 aus seiner Stellung d in seine Stellung e gebracht, in der der an dem Dichtbalg 48 anstehende Flüssigkeitsdruck über die Leitung 50, den Kanal 54 und die Abflussleitung 52 abgebaut werden kann. In dem drucklosen Zustand übt der Dichtbalg 48 keine Dichtfunktion aus. Die Verstellbewegung des Hydraulikzylinders 32 wird beendet, indem das Hydraulikventil 18 wieder in seine Neutralstellung a zurückgeführt wird, da dort die Förderung von Druckflüssigkeit durch die Pumpe 14 eingestellt wird und eingestellt bleibt, solange der von ihr aufgebaute Flüssigkeitsdruck nicht unter einen bestimmten Wert fällt. Da sich nun auch das Dichtventil 42 wieder in seiner Stellung d befindet, wird der Dichtbalg 48 druckbeaufschlagt und übt seine Dichtfunktion aus. Es ist dabei zu beachten, dass beim Verwenden eines offenen Hydrauliksystems die von der Pumpe 14 mit konstantem Verdrängungsvolumen gelieferte Druckflüssigkeit dem Vorratsbehälter 12 nicht drucklos zugeführt wird, sondern etwa unter Verwendung eines Druckregelventils unter einem Druck gehalten wird, der die Funktion des Dichtungselements 48 gewährleistet. Soll der Kolben des Hydraulikzylinders 32 in die andere Richtung bewegt, also abgesenkt werden, wird das Hydraulikventil 18 in seine Stellung c bewegt, worauf die Flüssigkeit über die Leitung 38, den Durchlass 40 und eine Leitung 56 in den Vorratsbehälter 12 entweichen kann. Nimmt das Hydraulikventil 18 seine Stellung c ein, dann befindet sich das Dichventil 42 automatisch in seiner Stellung f, in der wie auch in der Stellung e eine Entlastung des Dichtbalgs 48 stattfindet. Demnach findet stets eine Entlastung des Dichbalgs 48 zum Vorratsbehälter 12 hin dann statt, wenn sich das Hydraulikventil 18 entweder in seiner Stellung b oder c befindet, also auf eine der Durchgangsstellungen geschaltet ist. Dementgegengesetzt wird der Dichtbalg 48 druckbeaufschlagt, um abdichten zu können, wenn sich das Hydraulikventil 18 in seiner Neutralstellung a befindet.

Im nachfolgenden wird eine mögliche konkrete Ausführungsform des Dichtbalges 48 und des Hydraulikventils 18 in Verbindung mit Figur 2 erläutert.

Bei dieser Ausführungsform handelt es sich im wesentlichen um ein Gehäuse 58, das eine zylindrische Bohrung 60 aufweist, um darin einen Schieber 62 gleitend aufzunehmen. In der Bohrung 60 sind drei axial voneinander entfernte Anschlüsse in Form von Ringnuten eingebracht, die als Pumpenringnut 64, als Verbraucherringnut 66 und als Vorratsbehälterringnut 68 bezeichnet sind. Dabei liegen der Pumpenringnut 64 und der Vorratsbehälterringnut 68 in der Neutralstellung a des Hydraulikventils 18 jeweils ein gleich breiter erster und zweiter Ringraum 70 und 72 in dem Schieber 62 gegenüber. Der Schieber 62 ist über ein nicht gezeichnetes Ritzel, das in eine Zahnstange 74 eingreift, in der Bohrung 60 längs verschiebbar und kann einmal, entsprechend Stellung b, die mit der Pumpe 14 in Verbindung stehende Pumpenringnut 64 mit der zum Hydraulikzylinder 32 führenden Verbraucherringnut 66 über den ersten Ringraum 70 verbinden. Zum zweiten kann er, entsprechend Stellung c, über den zweiten Ringraum 72 die Verbraucherringnut 66 mit der zu dem Vorratsbehälter 12 führenden Vorratsbehälterringnut 68 verbinden. D. h. der erste Ringraum 70 kommt in eine Lage, in der er den Zufluss der Druckflüssigkeit von der in die Pumpenringnut 64 mündenden Leitung 20 zu der mit der Verbraucherringnut 66 in Verbindung stehenden Leitung 38 freigibt, was dem Durchlass 36 aus Figur 1 entspricht. Es bedeutet weiterhin, dass in der Stellung c die in der Leitung 38 zurückfliessende Flüssigkeit ihren Weg durch die Verbraucherringnut 66, den zweiten Ringraum 72, die Vorratsbehälterringnut 68 und die in letztere mündende Leitung 56 zu dem Vorratsbehälter 12 hin nimmt. Dabei ist der Weg zwischen den Leitungen 38 und 56 mit dem Durchlass 40 aus Figur 1 vergleichbar.

Zwischen dem ersten und dem zweiten Ringraum 70 und 72 sind in dem Schieber 62 als Trapeznuten geformte Ausnehmngen 76, 78 eingedreht, die der Aufnahme je eines Dichtbalges 48 dienen. Jeder Dichtbalg 48 nimmt eine Ringform mit im wesentlichen U-förmigem Querschnitt ein, wobei er mit seiner offenen Seite zu dem Ringinnern bzw. Schieberinnern hinzeigt und dort auch die grösste Länge der Trapeznuten 76, 78 zu liegen kommt. Der Dichtbalg 48 wird also von zwei sich zum Schieberinnern hin erstreckenden Schenkeln 80, 82 und einem Bodenteil 84 gebildet, wobei die Schenkel 80, 82 an ihren freien Enden 86 Wülste 88 tragen, die dem Dichtbalg 48 einen ausreichenden Sitz in der Trapeznut 76, 78 verleihen. Die Dichtbälge 48 sind aus einem ausreichend festen und elatischen Material wie Kunststoff gebildet, das es zulässt, dass sie zur Montage über die im Durchmesser grössten Stellen des Schiebers 62 in die betreffende Trapeznut 76, 78 geschoben werden können. In die Trapeznuten 76, 78 hinein erstreckt sich radial je eine Bohrung 90, 92, die von einer zentrisch in den Schieber 62 eingebrachten Längsbohrung 94 mit einem weiten und einem engen Bereich 96 und 98 ausgehen. Die Längsbohrung 94 erstreckt sich bei diesem Ausführungsbeispiel von der der Zahnstange 74 abgelegenen Seite des Schiebers 62 zunächst mit ihrem weiten Bereich 96, dann mit ihrem engen Bereich 98 in den Schieber 62 und endet an der Bohrung 92 für die der Vorratsbehälterringnut 68 zugelegene Trapeznut 78. In den weiten Bereich der Längsbohrung 94 hinein erstreckt sich eine Rohrleitung 100, die ein Endteil 102 des Gehäuses 58 durchdringt, das in dieses flüssigkeitsdicht eingeschraubt ist und mittels zweier Muttern 104 dort ortsfest gehalten wird. Ein sich beim Übergang vom weiten Bereich 96 zum engen Bereich 98 ergebender Absatz 97 dient als Begrenzung des Weges des Schiebers 62 in seiner Stellung c.

Die Verbindung des Dichtventils 42 mit den Dichtbälgen 48 kann auch über einen flexiblen Schlauch hergestellt werden, der sich in dem Gehäuse 58 erstreckt. Ein ausserhalb des Endteils 102 und somit ausserhalb des Gehäuses 58 überstehendes Rohrende 106 schliesst dann an das in der Beschreibung zu Figur 1 bereits erwähnte Dichtventil 42 an und entspricht der Leitung 50. Das Endteil 102 ist an das Gehäuse 58 über geeignete Dichtmittel angeflanscht. In dem weiten Bereich 96 der Längsbohrung 94 ist eine Nut 108 eingestochen, die einen im Querschnitt runden oder quadratischen Dichtring 110 aufnimmt, der für eine genügende Abdichtung zwischen dem Rohr 100 und der Längsbohrung 94 sorgt, so dass aus dieser keine Druckflüssigkeit in die zylindrische Bohrung 60 austreten kann. Durch die Verwendung des Dichtringes 110 ist es möglich, den Schieber 62 gegenüber der feststehenden Rohrleitung 100 in der zylindrischen Bohrung 60 zu verschieben, ohne die Dichtfähigkeit zu mindern. In Anlehnung zu der Beschreibung der Figur 1 kann demnach unter der Voraussetzung, dass die Anordnung und der Aufbau der Hydraulikanlage 10 im Prinzip unverändert bleibt, die Funktion wie folgt beschrieben werden.

In der Neutralstellung a des Hydraulikventils 18 liegen sich der erste Ringraum 70 und die Pumpenringnut 64 direkt gegenüber, und ein Zufluss von Druckflüssigkeit von der Pumpe 14 zu dem Hydraulikzylinder 32 findet nicht statt. Da sich gleichzeitig aber auch das Dichtventil 42 in seiner Stellung d befindet, wird beiden Dichtbälgen 48 über die Rohrleitung 100, die Längsbohrung 94 und die Bohrungen 90, 92 Druckflüssigkeit von der Pumpe 14 herkommend zugeführt, was bewirkt, dass die Dichtbälge 48 vom Schieberinnern fort in Richtung an die Innenseite der zylindrischen Bohrung 60 gepresst werden und dort durch das Anlegen des Bodenteils 84 eine Dichtwirkung hervorrufen. Es kann also weder zu noch von dem Hydraulikzylinder 32 fort Flüssigkeit fliessen; er verharrt demnach in seiner Stellung. Die Dichtbälge 48 bilden durch ihr festes Anliegen an der zylindrischen Bohrung 60 eine Flüssigkeitssperre, die den Zu- bzw. Abfluss von bzw. zu dem Hydraulikzylinder 32 unterbindet und diesen somit blockiert.

Soll der Hydraulikzylinder 32 jedoch beispielsweise ausgefahren werden, dann wird das Dichtventil 42 in seine Stellung e und das Hydraulikventil 18 in seine Stellung b verstellt, was zur Folge hat, dass der in den Dichtbälgen 48 aufgebaute Flüssigkeitsdruck über die Rohrleitung 100, den Kanal 54 und die Abflussleitung 52 zum Vorratsbehälter 12 hin abgebaut werden kann. Der in den Dichtbälgen 48 anstehende Flüssigkeitsdruck wird um so leichter abgebaut, als sich die Schenkel 80, 82 und das Bodenteil 84 aufgrund ihrer Elastizität im drucklosen Zustand wieder zusammenziehen, wodurch sich das Bodenteil 84 unmittelbar nach Abbau des Flüssigkeitsdruckes von der zylindrischen Bohrung 60 wegbewegt und die Dichtbälge 48 vollkommen in die Trapeznuten 76, 78 eindringen. Um ein sofortiges Zusammenziehen der Dichtbälge 48 zu erreichen, ist es auch denkbar, ringförmige Federelemente in das Bodenteil 84 einzubetten oder die Abflussleitung 52 bzw. den Kanal 54 so auszubilden, das dadurch der Abfluss schneller erfolgen kann als der Zufluss durch die Leitung 44. Die Durchflussgeschwindigkeit könnte durch die Verwendung einer Drossel oder einer Leitung 44 mit einem kleineren Durchmesser als der der Abflussleitung 52 geregelt werden. Nachdem der Schieber 62 seine Stellung b eingenommen hat, fliesst Druckflüssigkeit von der Pumpe 14 über die Leitung 20, die Pumpenringnut 64, den ersten Ringraum 70, die Verbraucherringnut 66 und die Leitung 38 zu dem Hydraulikzylinder 32. Hat der Hydraulikzylinder 32 seine gewünschte Stellung erreicht, dann wird der Schieber 62 wieder in seine Neutralstellung a zurückbewegt, und der Ausgangszustand tritt ein. Die gleichen Vorgänge laufen auch beim Absenken des Hydraulikzylinders 32 ab, wobei dann allerdings der Schieber 62 seine Stellung c einnimmt.

Die Verwendung derartiger Dichtbälge 48 ermöglicht es, auf in der Herstellung teure Sitzventile zu verzichten und die zylindrische Bohrung 60 und den Schieber 62 mit grösseren Toleranzen zu fertigen, woraus sich ein beträchtlicher Kostenvorteil ergibt. Diese Dichtbälge 48 ziehen sich im drucklosen Zustand bis unter die Mantelfläche des Schiebers 62 zurück und sind somit bei dessen Verschieben gegen Zerstörung durch sich an der Pumpenringnut 64, der Verbraucherringnut 66 und der Vorratsbehälterringnut 68 ergebende Kanten geschützt.

Ein derartiges Hydraulikventil 18 kann in den meisten Hydraulikanlagen Verwendung finden. Es kann beispielsweise als Zusatzsteuerventil bei Ackerschleppern benutzt werden, wobei der Hydraulikzylinder an einem Frontlader, einem Mähwerk, einer Fronthydraulik oder sonstigen Aggregaten angewendet werden kann. Besonders dann, wenn über das Hydraulikventil 18 die Hub- und Senkbewegung eines Stützrades eines angehängten Gerätes gesteuert wird, ist das Rückschlagventil 46 wünschenswert, weil es den Flüssigkeitsdruck in den Dichtbälgen 48 aufrechterhält, auch wenn die Pumpe 14 nicht mehr fördert. Dies bedeutet, dass auch dann, wenn die Pumpe den Druck nicht aufrechterhalten kann, die das Stützrad in seiner Stellung haltenden Hydraulikzyliner 32 sich nicht verstellen können.

**Patenansprüche**

1. Schieberventil (18) mit einem Gehäuse (58), das mindestens einen ersten und einen zweiten Anschluss (64, 66) aufweist, mit einem Schieber (62), der gegenüber dem Gehäuse (58) in mindestens eine eine Verbindung oder eine Sperre zwischen beiden Anschlüssen (64, 66) bildende Stellung bringbar ist, mit mindestens einem Dichtungselement (48), das den Schieber (62) konzentrisch umgibt, und mit einem Ringspalt zwischen dem Schieber (62) und dem Gehäuse (58) zwischen den Anschlüssen (64, 66) dadurch gekennzeichnet, dass das Dichtungselement (48) radial aus einer den Ringspalt freigebenden in eine den Ringspalt einnehmende Lage bringbar ist, nachdem der Schieber (62) seine die Sperre in der Verbindung bildende Stellung eingenommen hat.

2. Schieberventil nach Anspruch 1, wobei das Dichtungselement (48) flexibel ausgebildet und in der den Zufluss zu dem Verbraucher (32) sperrenden Stellung druckbeaufschlagbar ist.

3. Schieberventil nach Anspruch 1 oder 2, wobei das Dichtungselement (48) in eine Ausnehmung (76, 78) eingesetzt ist.

4. Schieberventil nach Anspruch 3, wobei die Ausnehmung (76, 78) in dem Schieber (62) vorgesehen ist.

5. Schieberventil nach einem oder mehreren der vorherigen Ansprüche, wobei das Dichtungselement (48) den Schieber (62) in der Ausnehmung (76, 78) reifenförmig umgibt.

6. Schieberventil nach einem oder mehreren der vorherigen Ansprüche, wobei das Dichtungselement (48) im Querschnitt trapezförmig ausgebildet und zum Schieber (62) hin offen ist.

7. Schieberventil nach einem oder mehreren der vorherigen Ansprüche, wobei die Ausnehmung (76, 78) in dem Schieber (62) ringförmig und im Querschnitt trapezförmig ausgebildet ist.

8. Schieberventil nach einem oder mehreren der vorherigen Ansprüche, wobei das Dichtungselement (48) in der den Zufluss von der Druckquelle (14) zu dem Verbraucher (32) sperrenden Stellung (a) druckbeaufschlagbar und in der den Zufluss zu dem Verbraucher (32) öffnenden Stellung (b) des Schiebers (62) drucklos ist.

9. Schieberventil nach einem oder mehreren der vorherigen Ansprüche, wobei die Ausnehmung (76, 78) in Richtung der Dichtkräfte eine grössere Erstreckung aufweist als das Dichtungselement (48) im drucklosen Zustand.

10. Schieberventil nach einem oder mehreren der vorherigen Ansprüche, wobei das Dichtungselement (48) endseitig mit Wülsten (88) versehen ist.

11. Schieberventil nach einem oder mehreren der vorherigen Ansprüche, wobei der Schieber (62) eine Längsbohrung (94, 96, 98) aufweist, die mit dem Dichtungselement (48) und mit der Druckquelle (14) verbunden ist.

12. Schieberventil nach einem oder mehreren der vorherigen Ansprüche, wobei zwischen dem zu dem Verbraucher (32) führenden Anschluss (66) und einem zu einem Vorratsbehälter (12) führenden Anschluss (68) ein weiteres Dichtungselement (48) vorgesehen ist, das in einer den Abfluss von dem Verbraucher (32) sperrenden Stellung (a) des Schiebers (62) druckbeaufschlagbar und in einer den Abfluss von diesem öffnenden Stellung (c) drucklos ist.

13. Schieberventil nach einem oder mehreren der vorherigen Ansprüche, dadurch gekennzeichnet, dass in der Verbindung zwischen dem Dichtungselement (48) und der Druckquelle (14) ein in Abhängigkeit von der Stellung des Schiebers (62) betätigbares Dichtventil (42) vorgesehen ist.

14. Schieberventil nach Anspruch 13, dadurch gekennzeichnet dass es mit dem Dichtventil (42) eine Baueinheit bildet.

15. Schieberventil nach Anspruch 11, wobei in die Längsbohrung (94, 96, 98) eine mit dem Gehäuse (58) des Schieberventils (18) fest verbundene Rohrleitung (100) mündet.

16. Schieberventil nach einem oder mehreren der vorherigen Ansprüche, wobei der Zufluss zu dem Dichtungselement (48) gedrosselt und der Abfluss von dem Dichtungselement (48) ungedrosselt erfolgt.

**Claims**

1. A spool valve (18) comprising a housing (58) which has at least first and second ports (64, 66), a spool (62) which can be moved relative to the housing (58) into at least one position forming a communication or a block between the two ports (64, 66), at least one sealing element (48) which concentrically surrounds the spool (62) and an annular gap between the spool (62) and the housing (58) between the ports (64, 66),characterised in that the sealing element (48) can be moved radially from a position of opening the annular gap into a position of occupying the annular gap after the spool (62) has taken up its position of forming the block in the communication.

2. A spool valve according to claim 1 wherein the sealing element (48) is flexible and can be subjected to pressure in the position of blocking the feed flow to the load (32).

3. A spool valve according to claim 1 or claim 2 wherein the sealing element (48) is fitted into a recess (76, 78).

4. A spool valve according to claim 3 wherein the recess (76, 78) is provided in the spool (62).

5. A spool valve according to one or more of the preceding claims wherein the sealing element (48) surrounds the spool (62) in the recess (76, 78) in a tyre-like configuration.

6. A spool valve according to one or more of the preceding claims wherein the sealing element (48) is of trapezoidal cross-section and is open towards the spool (62).

7. A spool valve according to one or more of the preceding claims wherein the recess (76, 78) in the spool (62) is annular and trapezoidal in cross-section.

8. A spool valve according to one or more of the preceding claims wherein the sealing element (48) can be subjected to pressure in the position (a) of blocking the feed flow from the pressure source (14) to the load (32) and is pressure-less in the position (b) of the spool (62) of opening the feed flow to the load (32).

9. A spool valve according to one or more of the preceding claims wherein the recess (76, 78) is of greater extent in the direction of the sealing forces than the sealing element (48) in the pressure-less condition.

10. A spool valve according to one or more of the preceding claims wherein the sealing element (48) is provided with beads (88) at its ends.

11. A spool valve according to one or more of the preceding claims wherein the spool (62) has a longitudinal bore (94, 96, 98) which communicates with the sealing element (48) and with the pressure source (14).

12. A spool valve according to one or more of the preceding claims wherein a further sealing element (48) is provided between the port (66) leading to the load (32) and a port (68) leading to a storage tank (12), which further sealing element can be subjected to pressure in a position (a) of the spool (62) of blocking the discharge flow from the load (32) and is pressure-less in a position (c) of opening the discharge flow therefrom.

13. A spool valve according to one or more of the preceding claims characterised in that disposed in the communication between the sealing element (48) and the pressure source (14) is a sealing valve (42) actuable in dependence on the position of the spool (62).

14. A spool valve according to claim 13 characterised in that it forms a structural unit with the sealing valve (42).

15. A spool valve according to claim 11 wherein a conduit (100) fixedly connected to the housing (58) of the spool valve (18) opens into the longitudinal bore (94, 96, 98).

16. A spool valve according to one or more of the preceding claims wherein the feed flow to the sealing element (48) is throttled and the discharge flow from the sealing element (48) is unthrottled.

**Revendications**

1. Soupape à tiroir (18) comportant un carter (58), qui comporte au moins un premier point de raccordement (64) et un second point de raccordement (66), comportant un tiroir (62) qui peut être amené, par rapport au carter (58), en au moins une position réalisant une liaison ou un blocage entre les deux points de raccordement (64, 66), comportant au moins un élément d'étanchéité (48) entourant concentriquement le tiroir (62), et comportant au moins une fente annulaire entre le tiroir (62) et le carter (58) entre les deux points de raccordement (64, 66), caractérisée en ce que l'élément d'étanchéité (48) pouvant être amené radialement d'une position dégageant la fente annulaire à une position occupant la fente annulaire, après que le tiroir (62) ait pris sa position réalisant le blocage dans la liaision.

2. Soupape à tiroir selon la revendication 1, dans laquelle l'élément d'étanchéité (48) est flexible et peut, dans la position empêchant l'écoulement vers l'appareil utilisateur (32) être soumis à l'effet de la pression.

3. Soupape à tiroir selon la revendication 1 ou 2, dans laquelle l'élément d'étanchéité (48) est inséré dans un évidement (76, 78).

4. Soupape à tiroir selon la revendication 3, dans laquelle l'évidement (76, 78) est prévu dans le tiroir (62).

5. Soupape à tiroir selon une ou plusieurs des revendications précédentes, dans laquelle l'élément d'étanchéité (48) entoure le tiroir (62) dans l'évidement (76, 78) à la manière d'un bandage pneumatique.

6. Soupape à tiroir selon une ou plusieurs des revendications précédentes, dans laquelle l'élément d'étanchéité (48) a, en section droite, une forme trapézoïdale et est ouvert en direction du tiroir (62).

7. Soupape à tiroir selon une ou plusieurs des revendications précédentes, dans laquelle l'évidement (76, 78) est formé dans le tiroir (62) avec une forme annulaire et une section droite présentant une forme trapézoïdale.

8. Soupape à tiroir selon une ou plusieurs des revendications précédentes, dans laquelle l'élément d'étanchéité (48) peut, dans la position (a) empêchant l'écoulement de la source de pression (14) vers l'appareil utilisateur (32), être soumis à l'effet de la pression et est sans pression dans la position (b) du tiroir (62) permettant cet écoulement vers l'appareil utilisateur (32).

9. Soupape à tiroir selon une ou plusieurs des revendications précédentes, dans laquelle l'évidement (76, 78) présente, dans la direction des forces d'étanchéité, une étendue supérieure à celle de l'élément d'étanchéité (48) à l'état non soumis à l'effet de la pression.

10. Soupape à tiroir selon une ou plusieurs des revendications précédentes, dans laquelle l'élément d'étanchéité (48) comporte des bourrelets ou talons (88) à ses extremités.

11. Soupape à tiroir selon une ou plusieurs des revendications précédentes, dans laquelle le tiroir (62) comporte un alésage longitudinal (94, 96, 98) qui est en communication avec l'élément d'étanchéité (48) et avec la source de pression (14).

12. Soupape à tiroir selon une ou plusieurs des revendications précédentes, dans laquelle il est prévu entre le point de raccordement (66) relié à l'appareil utilisateur (32) et un point de raccordement (68) relié au réservoir (12), un autre élément d'étanchéité (48) qui, dans une position (a) du tiroir (62) empêchant l'écoulement à partir de l'appareil utilisateur (32), peut être soumis à l'effet de la pression, et qui est sans pression dans une position (c) permettant cet écoulement à partir de cet appareil utilisateur.

13. Soupape à tiroir selon une ou plusieurs des revendications précédentes, caractérisée en ce qu'il est prévu, dans la communication entre l'élément d'étanchéité (48) et la source de pression (14), une soupape d'étanchéité (42) pouvant être actionnée en fonction de la position du tiroir (62).

14. Soupape à tiroir selon la revendication 13, caractérisée en ce qu'elle forme un ensemble unitaire avec la soupape d'étanchéité (42).

15. Soupape à tiroir selon la revendication 11, dans laquelle une conduite tubulaire (100) reliée rigidement au carter (58) de la soupape à tiroir (18) débouche dans l'alésage longitudinal (94, 96, 98).

16. Soupape à tiroir selon une ou plusieurs des revendications précédentes, dans laquelle l'écoulement en direction de l'élément d'étanchéité (48) est étranglé, et l'écoulement à partir de l'élément d'étanchéité (48) s'effectue sans étranglement.

FIG.1

FIG. 3

FIG. 2

0 139 150